# EUROPEAN PATENT SPECIFICATION

(11) **EP 4 545 785 B1**
(45) Date of publication and mention of the grant of the patent: **26.08.2026**
(21) Application number: 23205560.8
(22) Date of filing: 24.10.2023
(51) Int. Cl.: F03D 13/10, F03D 13/20, F03D 80/80

(54) **HOLDING STRUCTURE FOR A WIND TURBINE AND TOWER SHELL**
HALTESTRUKTUR FÜR EINE WINDENERGIEANLAGE UND TURMSCHALE
STRUCTURE DE MAINTIEN POUR UNE ÉOLIENNE ET PAROI DE TOUR

(43) Date of publication of application: 30.04.2025
(73) Proprietor: Siemens Gamesa Renewable Energy A/S, 7330 Brande (DK)
(72) Inventor: Dash, Kuber, 560100 Bengaluru (IN); Doddi, N V S Ganesh Babu, 560100 Bengaluru (IN); Kumar, Vikash, 560100 Bengaluru (IN); Kumar Tinku, Abhiram, 560100 Bengaluru (IN)
(74) Representative: SGRE-Association

(56) References cited:
- WO-A1-2014/122767
- DE-A1- 102016 116 810
- US-A1- 2022 042 490

## Description

The present invention relates to a holding structure for a tower of a wind turbine for holding internal components of the wind turbine tower. The invention also relates to a tower segment for a tower of a wind turbine.

In towers for wind turbines, a plurality of components of the wind turbine has to be arranged, such as ladders, high voltage cables, low voltage cables, cable trays, electronic components, lift masts or the like. Within this invention, for reasons of simplicity, high voltage cables and/or low voltage cables are subsumed to a *"cable harness".* These components are fixed to a holding structure. Different holding structures for wind turbine towers are disclosed in the documents WO 2014 / 122 767 A1, US 2022 / 042 490 A1 and DE 10 2016 116 810 A1.

Towers of wind turbines are usually manufactured segmentally as tower segments at a production site. The tower segments comprise a segment shell, which encompasses a segment interior. The holding structure can be preassembled to the segment shell. After production, the tower segments are transported to a deployment site, where the tower segments are stacked on top of each other and mutually connected by fasteners, such as nuts, bolts or the like.

With an increasing height of the tower, an oscillation displacement of the top of the tower from a straight up position increases due to wind forces. For modern wind turbines, such oscillation displacement can be up to 5 meters. Due to the large oscillation displacement of the tower and an increasing weight of the cable harnesses, holding structures of a conventional design are easily overloaded and, therefore, very likely to collapse.

Moreover, with increasing height of the tower, a diameter of the tower, especially the lower tower segments, increases. With an increasing diameter of the tower segments, an ovalization of the tower segment increases. Ovalization generally occurs when the tower segment is arranged horizontally, e.g., during transport or storage. Since the holding structures are usually connected to the segment shell at different positions, ovalization can lead to a stretching and/or a compression or even breaking of the holding structure.

Another problem with the increased height of the tower is related to tower bending and thermal expansion, which can sum up to almost 10 cm for a tower with a height of 140 m. This effect also concerns internal components of the tower, such as ladders, lift masts or the like, since the internal components are subject to a different thermal expansion.

Known holding structures have the disadvantage that the above mentioned requirements for new wind turbine designs cannot be fulfilled sufficiently. As a result, the risk of failure or damages to the holding structure is increased.

It is therefore the object of the present invention to eliminate or at least partially eliminate the disadvantages described above in the case of a holding structure for a tower of a wind turbine for holding internal components of the wind turbine tower. In particular, it is the object of the present invention to create a tower segment for a tower of a wind turbine, which has an increased durability and a reduced risk of failure, in a simple and inexpensive manner.

The above object is achieved by the claims. Accordingly, the problem is solved by a tower segment with the features of the independent claim 1. Further features and details of the invention emerge from the subclaims, the description and the drawings.

According to a first aspect of the invention, the object is achieved by a tower segment for a tower of a wind turbine, comprising a tower segment shell, encompassing a segment interior, an upper segment flange for connecting the tower segment to an upper component of the wind turbine and a lower segment flange for connecting the tower segment to a lower component of the wind turbine. Inside the segment interior, a holding structure for holding internal components of the wind turbine tower is attached to the tower segment shell. The holding structure comprises a main beam for providing a holding interface for holding the internal components, wherein the holding structure is attached to a first shell section of a tower shell of the wind turbine tower by a first attachment section of the holding structure. The holding structure is attached to a second shell section of the tower shell by a second attachment section of the holding structure. According to the invention, the first attachment section is arranged at an attachment end of a first crossbar, wherein a connection end of the first crossbar is connected to a first end section of the main beam with a first angle, wherein the first angle is smaller than 180°. Furthermore, at least one connection end is connected to the main beam by a connection bracket, wherein the connection bracket has a higher flexibility than the main beam and/or the first crossbar, wherein at least one attachment end comprises an attachment bracket, wherein the attachment bracket has a higher flexibility than the main beam and/or the first crossbar.

The holding structure is configured for providing the holding interface for holding a plurality of internal components of the wind turbine tower. Such internal components can be a ladder, a cable harness, a lift mast, electric components, assembly brackets or the like. For this purpose, the holding structure comprises the main beam. Preferably, the main beam has a straight extension. The main beam can be configured, e.g., as an o-profile, a c-profile, a t-profile and/or an l-profile. It is preferred that the second attachment section is located at a free end of the main beam. Thus, the main beam can be attached to the second shell section of the tower shell directly or indirectly, by an intermediate coupling part, e.g., a bracket, an elbow fitting or the like. The internal components can be attached to the main beam, e.g., directly, by an assembly bracket and/or a crossbar, e.g., the first crossbar, a second crossbar or the like.

To protect the main beam from damages or from falling off the tower shell, the first crossbar is provided. The first crossbar can be straight, curved, angled or the like. Preferably, the first crossbar is configured, e.g., as an o-profile, a c-profile, a t-profile and/or an l-profile. It is further preferred that the first crossbar has the same profile as the main beam. Preferably, the first crossbar has the same height and width as the main beam. Further preferred, the first crossbar is shorter than the main beam. The length of the first crossbar can be, e.g., half the length of the main beam or even less.

The first crossbar comprises the attachment end, facing away from the main beam, and the connection end, which is connected to the first end section of the main beam. It can be provided that the first crossbar and the main beam are provided as separate parts, which are interconnected by fasteners, such as bolts, nuts, welds, rivets or the like. Alternatively, the first crossbar can be monolithic with the main beam.

Between the main beam and the first crossbar, the first angle is formed. The first angle is less than 180°, preferably less than 170°. In other words, the main beam and the first crossbar extend in different directions, e.g., on different straights, curves or the like. Preferably, the first angle is between 90° and 150°, more preferred about 120°.

The attachment end of the first crossbar comprises the first attachment section. The first attachment section is configured for being fixed to the tower shell directly or indirectly, by an intermediate coupling part, e.g., a bracket, an elbow fitting or the like.

A holding structure according to the invention has the advantage over conventional holding structures that in a simple and inexpensive way, deformations of the tower shell can be compensated better. Due to the first angle between the first crossbar and the main beam of less than 180°, the holding structure can slightly change its shape upon pulling and pushing forces of the tower shell onto the holding structure. Thus, the joints between the holding structure and the tower shell are less loaded and, therefore, less likely to fail. Beyond that, the holding structure can be assembled to a tower segment in a preassembly step before the tower segment is stacked to build the tower at the deployment site. By these means, internal components of the tower segment, like ladders, cable harnesses, lift masts, electric components, assembly brackets or the like, can be preassembled as well. This makes the final assembly at the deployment site less complex, faster and less expensive.

According to a preferred further development of the invention, the second attachment section is arranged at an attachment end of a second crossbar, wherein a connection end of the second crossbar is connected to a second end section of the main beam with a second angle, wherein the second end section is opposite to the first end section, and wherein the second angle is smaller than 180°. To further protect the main beam from damages or from falling off the tower shell, the second crossbar is provided. The second crossbar can be straight, curved, angled or the like. Preferably, the second crossbar is configured, e.g., as an o-profile, a c-profile, a t-profile and/or an l-profile. It is further preferred that the second crossbar has the same profile as the first crossbar and/or the main beam. Preferably, the second crossbar has the same height and/or width as the first crossbar and/or the main beam. Further preferred, the second crossbar is shorter than the main beam. Preferably, the second crossbar has the same length as the first crossbar. The length of the second crossbar can be, e.g., half the length of the main beam or even less. The second crossbar comprises the attachment end, facing away from the main beam and the connection end, which is connected to the second end section of the main beam. It can be provided that the second crossbar and the main beam are provided as separate parts, which are interconnected by fasteners, such as bolts, nuts, welds, rivets or the like. Alternatively, the second crossbar can be monolithic with the main beam. Between the main beam and the second crossbar, the second angle is formed. The second angle is less than 180°, preferably less than 170°. In other words, the main beam and the second crossbar extend in different directions, e.g., on different straights, curves or the like. Preferably, the second angle is between 90° and 150°, more preferred about 120°. The attachment end of the second crossbar comprises the second attachment section. The second attachment section is configured for being fixed to the tower shell directly or indirectly, by an intermediate coupling part, e.g., a bracket, an elbow fitting or the like. This has the advantage that in a simple and inexpensive way, due to the second crossbar, a flexibility of the holding structure is improved. Thus, the stability of the assembled holding structure, with respect to the size and/or the shape variations of the tower shell, is further improved.

It is preferred, according to the invention, that the main beam, the first crossbar and the second crossbar are arranged in the same plane. Preferably, the same plane is a horizontal plane with respect to the erected wind turbine tower at the deployment site. This has the advantage that in a simple and inexpensive way, an elastic deformation of the holding structure due to a deformation of the tower shell can be better planned for inflicting no or at least less damage to the internal components of the tower.

More preferred, a connection end of a third crossbar is connected to the first end section of the main beam with a third angle, wherein the third angle is smaller than the first angle, wherein an attachment end of the third crossbar is configured as a third attachment section of the holding structure for attaching the holding structure to a third shell section of the tower shell. To further protect the main beam from damages or from falling off the tower shell, the third crossbar is provided. The third crossbar can be straight, curved, angled or the like. Preferably, the third crossbar is configured, e.g., as an o-profile, a c-profile, a t-profile and/or an l-profile. It is further preferred that the third crossbar has the same profile as the first crossbar and/or the second crossbar and/or the main beam. Preferably, the third crossbar has the same height and/or width as the first crossbar and/or the second crossbar and/or the main beam. Further preferred, the third crossbar is shorter than the main beam. Preferably, the third crossbar has the same length as the first crossbar and/or the second crossbar. The length of the third crossbar can be, e.g., half the length of the main beam or even less. The third crossbar comprises the attachment end, facing away from the main beam and the connection end, which is connected to the third end section of the main beam. It is preferred that the third crossbar and the main beam are provided as separate parts, which are interconnected by fasteners, such as bolts, nuts, welds, rivets or the like. Between the main beam and the third crossbar, the third angle is formed. The third angle is less than the first angle, preferably at least 10° less than the first angle and more preferred at least 20°less than the first angle. The attachment end of the third crossbar comprises the third attachment section. The third attachment section is configured for being fixed to the tower shell directly or indirectly, by an intermediate coupling part, e.g., a bracket, an elbow fitting or the like. It is preferred, according to the invention, that the main beam, the first crossbar, the second crossbar and the third crossbar are arranged in the same plane. Preferably, the same plane is a horizontal plane with respect to the erected wind turbine tower at the deployment site. This has the advantage that in a simple and inexpensive way, due to the third crossbar, the stability of the holding structure is improved, wherein a sufficient flexibility of the holding structure is maintained. Thus, the stability of the assembled holding structure, with respect to the size and/or the shape variations of the tower shell, is further improved.

In a particularly preferred embodiment, a connection end of a fourth crossbar is connected to the main beam, wherein an attachment end of the fourth crossbar is configured as a fourth attachment section of the holding structure for attaching the holding structure to a fourth shell section of the tower shell, wherein the fourth attachment section is arranged at a different height than the first attachment section. To further protect the main beam from damages or from falling off the tower shell, the fourth crossbar is provided. The fourth crossbar can be straight, curved, angled or the like. Preferably, the fourth crossbar is configured, e.g., as an o-profile, a c-profile, a t-profile and/or an l-profile. It is further preferred that the fourth crossbar has the same profile as the first crossbar and/or the second crossbar and/or the third crossbar and/or the main beam. Preferably, the fourth crossbar has the same height and/or width as the first crossbar and/or the second crossbar and/or the third crossbar and/or the main beam. Further preferred, the fourth crossbar is shorter than the main beam. Preferably, the fourth crossbar has the same length as the first crossbar and/or the second crossbar and/or the third crossbar. The length of the fourth crossbar can be, e.g., half the length of the main beam or even less. The fourth crossbar comprises the attachment end, facing away from the main beam and the connection end, which is connected to the fourth end section of the main beam. It is preferred that the fourth crossbar and the main beam are provided as separate parts, which are interconnected by fasteners, such as bolts, nuts, welds, rivets or the like. The fourth shell section is at a different height with respect to the erected tower than the first shell section. Therefore, the fourth attachment section is at a different height than the first attachment section. Preferably, the fourth attachment section is lower than the first attachment section. Alternatively, the fourth attachment section can be higher than the first attachment section. The fourth attachment section is configured for being fixed to the tower shell directly or indirectly, by an intermediate coupling part, e.g., a bracket, an elbow fitting or the like. This has the advantage that in a simple and inexpensive way, due to the fourth crossbar, the stability of the holding structure is improved, wherein a sufficient flexibility of the holding structure is maintained. Thus, the stability and integrity of the assembled holding structure, with respect to the size and/or the shape variations of the tower shell, is further improved.

According to the invention, at least one connection end is connected to the main beam by a connection bracket. It is preferred that the connection bracket is fixed to the at least one connection end and/or the main beam by bolts, welds, rivets or the like. The connection bracket can be made of the same material as the main beam and/or the first crossbar. Alternatively, the connection bracket is made of a different material than the main beam and/or the first crossbar. This has the advantage that in a simple and inexpensive way, the assembly of the holding structure is further improved.

According to the invention, the connection bracket has a higher flexibility than the main beam and/or the first crossbar and/or the second crossbar. Preferably, the connection bracket has a higher flexibility than the second crossbar and/or the third crossbar and/or the fourth crossbar. Due to the higher flexibility, the connection bracket can have the technical function as a self-locking hinge. Thus, when external forces act on the holding structure, the connection bracket is more likely to bend than the main beam or the respective crossbar. This has the advantage that in a simple and inexpensive way, the flexibility of the holding structure is improved, wherein a sufficient stability of the holding structure is maintained. Thus, the stability and integrity of the assembled holding structure, with respect to the size and/or the shape variations of the tower shell, is further improved.

According to the invention, at least one attachment end comprises an attachment bracket, wherein the attachment bracket has a higher flexibility than the main beam and/or the first crossbar. It is preferred that the attachment bracket is fixed to the at least one attachment end by bolts, welds, rivets or the like. The attachment bracket can be made of the same material as the main beam and/or the first crossbar. Alternatively, the attachment bracket is made of a different material than the main beam and/or the first crossbar. Preferably, the attachment bracket has a higher flexibility than the second crossbar and/or the third crossbar and/or the fourth crossbar. Due to the higher flexibility, the attachment bracket can have the technical function as a self-locking hinge. Thus, when external forces act on the holding structure, the attachment bracket is more likely to bend than the main beam or the respective crossbar. This has the advantage that in a simple and inexpensive way, the flexibility of the holding structure is improved, wherein a sufficient stability of the holding structure is maintained. Thus, the stability and integrity of the assembled holding structure, with respect to the size and/or the shape variations of the tower shell, is further improved.

It is preferred, according to the invention, that one holding interface is constituted by a ladder holding bracket for holding a ladder. The ladder holding bracket can be arranged on the same plane as the main beam and the first crossbar. Alternatively, the ladder holding bracket can be arranged on a different plane than the main beam and the first crossbar.

Preferably, the ladder holding bracket comprises a contact plane for contacting the ladder. This has the advantage that in a simple and inexpensive way, the assembly of the ladder can be improved.

Preferably, one holding interface is constituted by a cable pipe for holding a cable harness, wherein the cable pipe is mounted to the main beam. The cable pipe can be configured as a closed pipe, an open pipe or a segmented pipe, which can be opened by removing a segment and closed by positioning the removed segment back in place. The cable pipe can be fixed to the main beam by a pipe bracket, bolts, nuts, welds, rivets or the like. The cable harness can comprise a plurality of different cables. Moreover, the cable harness can be inserted into the cable pipe, especially in a preassembly process at the production site of the tower segment. This has the advantage that in a simple and inexpensive way, the assembly of the cable harness can be improved. Moreover, a protection of the cable harness is improved by the cable pipe.

Particularly preferred, the cable pipe comprises a clamping device for clamping a cable harness, which is arranged inside the cable pipe. During the preassembly process at the production site of the tower segment, the cable harness can be installed inside the cable pipe and fixed to the cable pipe by the clamping device. This has the advantage that in a simple and inexpensive way, the assembly of the tower segment is further improved. By the clamping device, the cable harness is secured from slipping off the cable pipe during storage, transportation and final assembly at the deployment site of the wind turbine.

Preferably, one holding interface is constituted by an intermediate section of the main beam for holding a lift mast of a lift. Preferably, the intermediate section of the main beam has an increased stability, especially for torsion stress, than the rest of the main beam. Preferably, the intermediate section comprises a contact plane for contacting the lift mast. The lift mast can be connected to the main beam by bolts, nuts, welds, rivets or the like. Thus, the lift mast can be assembled to the tower segment at the production site in a preassembly process. This has the advantage that in a simple and inexpensive way, the assembly of the lift mast can be improved.

Preferably, the holding interface has a slot for allowing a relative movement of the internal component, attached to the holding interface and the holding structure. Alternatively or additionally, the holding interface can have sliding features for allowing such relative movement. This has the advantage that in a simple and inexpensive way, the flexibility of the holding structure is improved, wherein a sufficient stability of the holding structure is maintained. Thus, the stability and integrity of the assembled holding structure, with respect to the size and/or the shape variations of the tower shell, is further improved.

According to a second aspect of the invention, the object is achieved by a tower segment for a tower of a wind turbine. The tower segment comprises a tower segment shell, encompassing a segment interior, an upper segment flange for connecting the tower segment to an upper component of the wind turbine and a lower segment flange for connecting the tower segment to a lower component of the wind turbine. Inside the segment interior, a holding structure according to the invention is attached to the tower segment shell.

The first attachment section of the holding structure is attached to a first shell section of the tower segment shell. The second attachment section is attached to a second shell section of the tower segment shell. The tower segment shell is considered as a segment of the tower shell of the tower. Between the first crossbar and the main beam of the holding structure, the first angle, which is smaller than 180°, is constituted.

The tower segment according to the invention has all the advantages that have already been described for a holding structure according to the first aspect of the invention. Accordingly, the tower segment according to the invention has the advantage over conventional tower segments that in a simple and inexpensive way, deformations of the tower segment shell can be compensated better. Due to the first angle between the first crossbar and the main beam of less than 180°, the holding structure can slightly change its shape upon pulling and pushing forces of the tower segment shell onto the holding structure. Thus, the joints between the holding structure and the tower segment shell are less loaded and, therefore, less likely to fail. Beyond that, the holding structure can be assembled to the tower segment in a preassembly step, before the tower segment is stacked to build the tower at the deployment site. By these means, internal components of the tower segment, like ladders, cable harnesses, lift masts, electric components, assembly brackets or the like, can be preassembled as well. This makes the final assembly at the deployment site less complex, faster and less expensive.

Further advantages, features and details of the invention unfold from the following description, in which by reference to drawings, working examples of the present invention are described in detail. Thereby, the features from the claims as well as the features mentioned in the description can be essential for the invention as taken alone or in an arbitrary combination. In the drawings:
- Figure 1: shows a schematic perspective view of a tower segment according to a preferred embodiment of the invention,
- Figure 2: shows another schematic perspective view of the tower segment of fig. 1,
- Figure 3: shows a schematic perspective view of a holding structure according to a preferred embodiment of the invention,
- Figure 4: shows another schematic perspective view of the holding structure of fig. 3,
- Figure 5: shows a schematic perspective first detail view of the holding structure according to the preferred embodiment of the invention,
- Figure 6: shows a schematic perspective second detail view of the holding structure according to the preferred embodiment of the invention,
- Figure 7: shows a schematic perspective third detail view of the holding structure according to the preferred embodiment of the invention,
- Figure 8: shows a schematic perspective top view of the tower segment according to the preferred embodiment of the invention in a first condition, and
- Figure 9: shows a schematic perspective top view of the tower segment according to the preferred embodiment of the invention in a second condition.

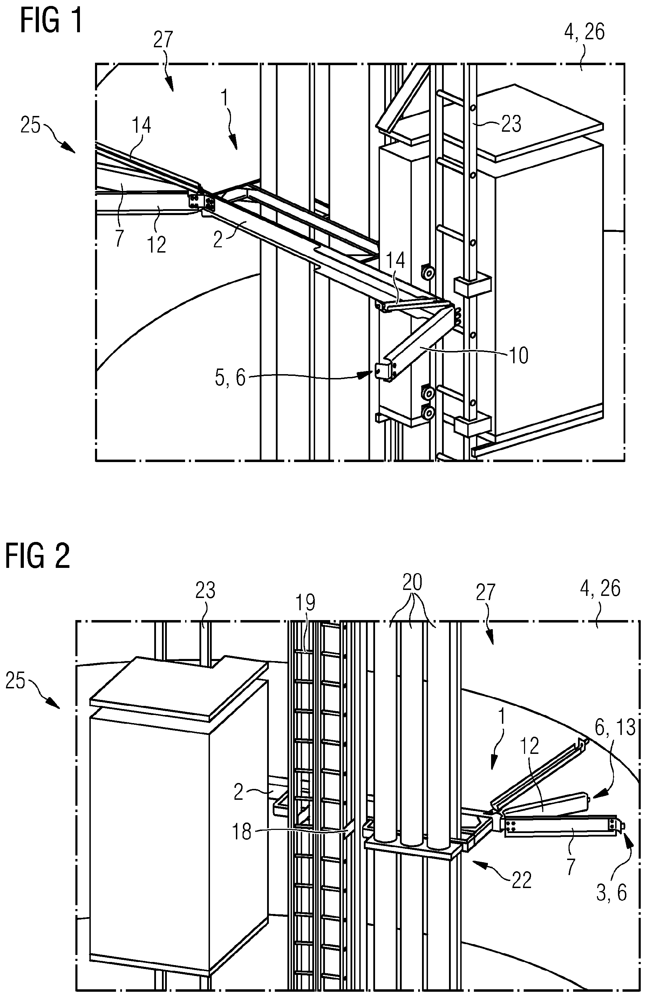

Elements with the same function and effectiveness are denoted each in figures 1 - 9 with the same reference numbers.

In fig. 1, a tower segment 25 according to a preferred embodiment of the invention is shown in a schematic perspective view.

Fig. 2 shows another schematic perspective view of the tower segment 25 of fig. 1.

The tower segment 25 comprises a tower segment shell 26, encompassing a segment interior 27. The tower segment shell 26 constitutes a segment of a tower shell 4 of the tower. A preferred embodiment of a holding structure 1 is arranged in the segment interior 27.

The holding structure 1 comprises a main beam 2 with a horizontal orientation inside the segment interior 27. The main beam 2 is connected to the tower segment shell 26 by a first crossbar 7, a second crossbar 10, a third crossbar 12 and a fourth crossbar 14. A first attachment section 3 of the first crossbar 7 is configured as an attachment end 6 and is attached to a first shell section of the tower segment shell 26. A second attachment section 5 of the second crossbar 10 is configured as an attachment end 6 and is attached to a second shell section of the tower segment shell 26. A third attachment section 13 of the third crossbar 12 is configured as an attachment end 6 and is attached to a third shell section of the tower segment shell 26. A fourth attachment section 15 of the fourth crossbar 14 is configured as an attachment end 6 and is attached to a fourth shell section of the tower segment shell 26. The first attachment section 3, the second attachment section 5 and the third attachment section 13 are arranged at the same height. The fourth attachment section 15 is located higher than the first attachment section 3.

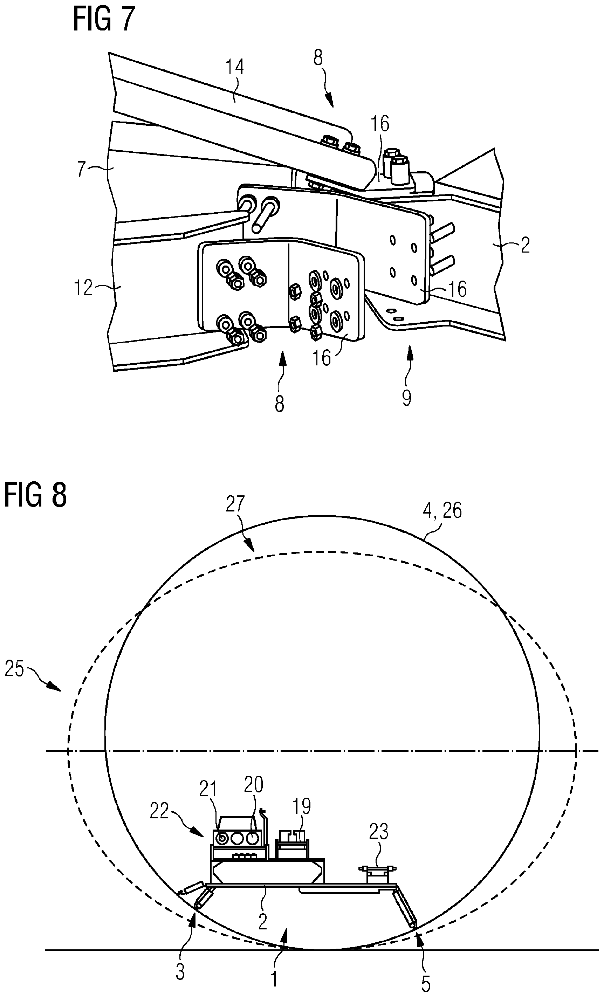

At the main beam 2, a ladder holding bracket 18 is arranged, wherein at the ladder holding bracket 18, a ladder 19 is attached. Furthermore, a plurality of cable pipes 20 are attached to the main beam 2. At the cable pipes 20, a clamping device for clamping and holding a cable harness 21 (cf. fig. 8) inside the cable pipes 20 is arranged. Moreover, a lift mast 23 is attached to the main beam 2.

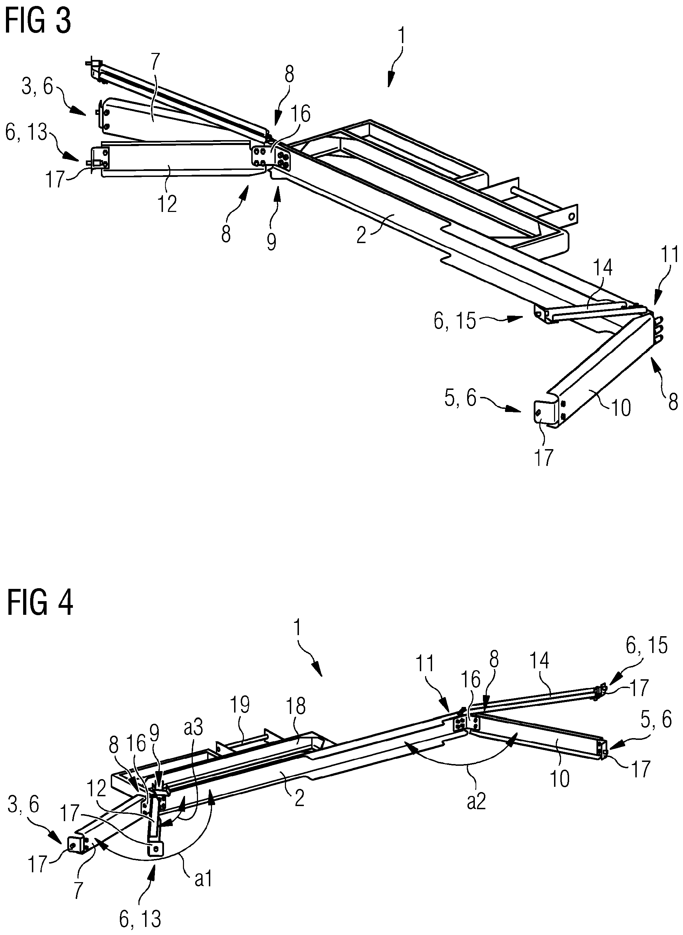

In fig. 3, a holding structure 1 according to a preferred embodiment of the invention is shown in a schematic perspective view.

Fig. 4 shows another schematic perspective view of the holding structure 1 of fig. 3.

A connection end 8 of the first crossbar 7 is attached to a first end section 9 of the main beam 2 by a connection bracket 16 with bolts and nuts. Between the main beam 2 and the first crossbar 7, a first angle a1 is formed. In this example, the first angle a1 is about 150°. A connection end 8 of the second crossbar 10 is attached to a second end section 11 of the main beam 2 by a connection bracket 16 with bolts and nuts. Between the main beam 2 and the second crossbar 10, a second angle a2 is formed. In this example, the second angle a2 is about 150°. A connection end 8 of the third crossbar 12 is attached to the first end section 9 of the main beam 2 by a connection bracket 16 with bolts and nuts. Between the main beam 2 and the third crossbar 12, a third angle a3 is formed. In this example, the third angle a3 is about 120°. For attaching the first crossbar 7, the second crossbar 10, the third crossbar 12 and the fourth crossbar 14 to the tower segment shell 26 by bolts and nuts, at each attachment end 6, an attachment bracket 17 is provided.

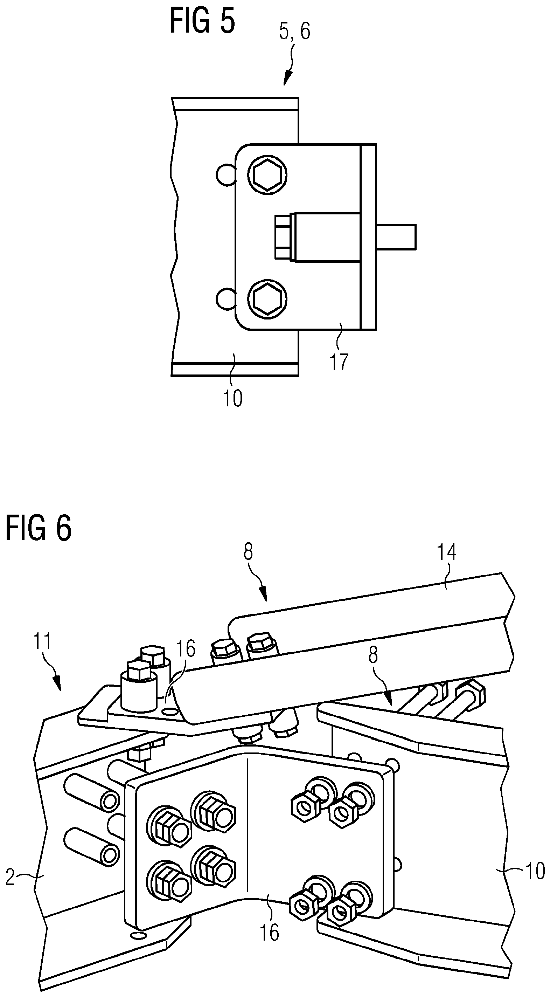

In fig. 5, the holding structure 1 according to the preferred embodiment of the invention is shown in a schematic first detail view. In this detail view, the attachment bracket 17 attached to the second attachment section 5 of the second crossbar 10 by bolts and nuts is shown. Thus, a connection end 8 is provided.

Fig. 6 shows the holding structure 1 according to the preferred embodiment of the invention in a schematic second detail view. The second end section 11 of the main beam 2 is attached to two connection brackets 16 by nuts and bolts. One of the connection brackets 16 is connected to the connection end 8 of the second crossbar 10 by nuts and bolts. The other connection bracket 16 is connected to the connection end 8 of the fourth crossbar 14 by nuts and bolts.

In fig. 7, the holding structure 1 according to the preferred embodiment of the invention is shown in a schematic third detail view. The first end section 9 of the main beam 2 is attached to three connection brackets 16 by nuts and bolts. One of the connection brackets 16 is connected to the connection end 8 of the first crossbar 7 by nuts and bolts. Another connection bracket 16 is connected to the connection end 8 of the third crossbar 12 by nuts and bolts. Another connection bracket 16 is connected to the connection end 8 of the fourth crossbar 14 by nuts and bolts. Two of the connection brackets 16 are attached to the first end section 9 of the main beam by the same nuts and bolts.

Fig. 8 shows the tower segment 25 according to the preferred embodiment of the invention in a first condition in a schematic top view. In the first condition, the tower segment shell 26 of the tower segment 25 has a round shape. In this figure, a cable harness 21 is visible. The cable harness 21 is arranged inside the cable pipe 20 and fixed to the cable pipe 20 by the clamping device 22.

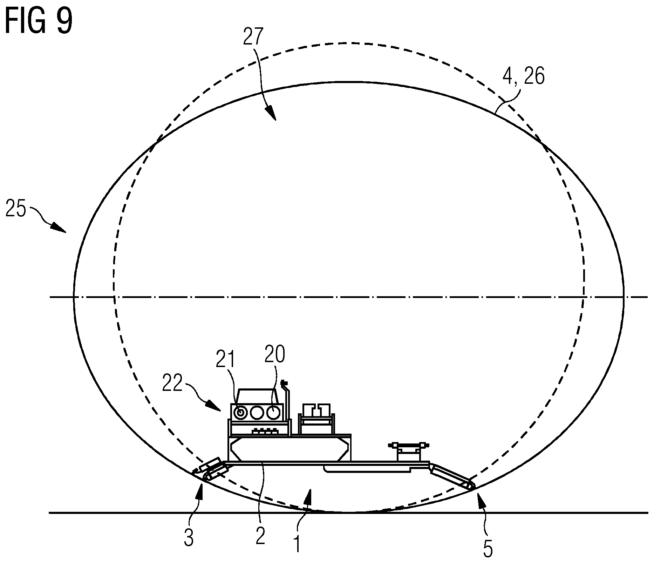

In fig. 9, the tower segment 25 of fig. 8 is shown in a second condition in a schematic top view. In the second condition, the tower segment shell 26 of the tower segment 25 has an oval shape due to ovalization, e.g., during horizontal transport or storage of the tower segment 25. The holding structure 1 is adapted to the oval shape of the tower segment shell 26.

## Claims

1. A tower segment (25) for a tower of a wind turbine, comprising a tower segment shell (26), encompassing a segment interior (27), an upper segment flange for connecting the tower segment (25) to an upper component of the wind turbine and a lower segment flange for connecting the tower segment (25) to a lower component of the wind turbine, wherein inside the segment interior (27), a holding structure (1) for holding internal components of the wind turbine tower is attached to the tower segment shell (26), wherein the holding structure (1) comprising a main beam (2) for providing a holding interface for holding the internal components, wherein the holding structure (1) is attached to a first shell section of a tower shell (4) of the wind turbine tower by a first attachment section (3) of the holding structure (1) and wherein the holding structure (1) is attached to a second shell section of the tower shell (4) by a second attachment section (5) of the holding structure (1), and the first attachment section (3) is arranged at an attachment end (6) of a first crossbar (7), wherein a connection end (8) of the first crossbar (7) is connected to a first end section (9) of the main beam (2) with a first angle (a1), wherein the first angle (a1) is smaller than 180°, **characterized in that** at least one connection end (8) is connected to the main beam (2) by a connection bracket (16), wherein the connection bracket (16) has a higher flexibility than the main beam (2) and/or the first crossbar (7), wherein at least one attachment end (6) comprises an attachment bracket (17), wherein the attachment bracket (17) has a higher flexibility than the main beam (2) and/or the first crossbar (7).

2. Tower segment (25) according to claim 1,
**characterized in**
**that** the second attachment section (5) is arranged at an attachment end (6) of a second crossbar (10), wherein a connection end (8) of the second crossbar (10) is connected to a second end section (11) of the main beam (2) with a second angle (a2), wherein the second end section (11) is opposite to the first end section (9), and wherein the second angle (a2) is smaller than 180°.

3. Tower segment (25) according to claim 2,
**characterized in**
**that** the main beam (2), the first crossbar (7) and the second crossbar (10) are arranged in the same plane.

4. Tower segment (25) according to any of the previous claims,
**characterized in**
**that** a connection end (8) of a third crossbar (12) is connected to the first end section (9) of the main beam (2) with a third angle (a3), wherein the third angle (a3) is smaller than the first angle (a1), wherein an attachment end (6) of the third crossbar (12) is configured as a third attachment section (13) of the holding structure (1) for attaching the holding structure (1) to a third shell section of the tower shell (4).

5. Tower segment (25) according to claim 4,
**characterized in**
**that** a connection end (8) of a fourth crossbar (14) is connected to the main beam (2), wherein an attachment end (6) of the fourth crossbar (14) is configured as a fourth attachment section (15) of the holding structure (1) for attaching the holding structure (1) to a fourth shell section of the tower shell (4), wherein the fourth attachment section (15) is arranged at a different height than the first attachment section (3).

6. Tower segment (25) according to any of the previous claims,
**characterized in**
**that** one holding interface is constituted by a ladder holding bracket (18) for holding a ladder (19).

7. Tower segment (25) according to any of the previous claims,
**characterized in**
**that** one holding interface is constituted by a cable pipe (20) for holding a cable harness (21), wherein the cable pipe (20) is mounted to the main beam (2).

8. Tower segment (25) according to claim 7,
**characterized in**
**that** the cable pipe (20) comprises a clamping device (22) for clamping the cable harness (21), which is arranged inside the cable pipe (20).

9. Tower segment (25) according to any of the previous claims,
**characterized in**
**that** one holding interface is constituted by an intermediate section of the main beam (2) for holding a lift mast (23) of a lift.

10. Tower segment (25) according to any of the previous claims,
**characterized in**
**that** the holding interface has a slot (24) for allowing a relative movement of the internal component, attached to the holding interface and the holding structure (1).

## Patentansprüche

1. Turmsegment (25) für einen Turm einer Windturbine, umfassend eine Turmsegmenthülle (26), die einen Segmentinnenraum (27) umschließt, einen oberen Segmentflansch zum Verbinden des Turmsegments (25) mit einer oberen Komponente der Windturbine und einen unteren Segmentflansch zum Verbinden des Turmsegments (25) mit einer unteren Komponente der Windturbine, wobei innerhalb des Segmentinnenraums (27) eine Haltestruktur (1) zum Halten innerer Komponenten des Windturbinenturms an der Turmsegmenthülle (26) befestigt ist, wobei die Haltestruktur (1) einen Hauptträger (2) zum Bereitstellen einer Halteschnittstelle zum Halten der inneren Komponenten umfasst, wobei die Haltestruktur (1) durch einen ersten Befestigungsabschnitt (3) der Haltestruktur (1) an einem ersten Hüllenabschnitt einer Turmhülle (4) des Windturbinenturms befestigt ist und wobei die Haltestruktur (1) durch einen zweiten Befestigungsabschnitt (5) der Haltestruktur (1) an einem zweiten Hüllenabschnitt der Turmhülle (4) befestigt ist und der erste Befestigungsabschnitt (3) an einem Befestigungsende (6) eines ersten Querbalkens (7) angeordnet ist, wobei ein Verbindungsende (8) des ersten Querbalkens (7) mit einem ersten Endabschnitt (9) des Hauptträgers (2) mit einem ersten Winkel (a1) verbunden ist, wobei der erste Winkel (a1) kleiner als 180° ist, **dadurch gekennzeichnet, dass** mindestens ein Verbindungsende (8) mit dem Hauptträger (2) durch eine Verbindungshalterung (16) verbunden ist, wobei die Verbindungshalterung (16) eine höhere Flexibilität als der Hauptträger (2) und/oder der erste Querbalken (7) aufweist, wobei mindestens ein Befestigungsende (6) eine Befestigungshalterung (17) umfasst, wobei die Befestigungshalterung (17) eine höhere Flexibilität als der Hauptträger (2) und/oder der erste Querbalken (7) aufweist.

2. Turmsegment (25) nach Anspruch 1,
**dadurch gekennzeichnet, dass** der zweite Befestigungsabschnitt (5) an einem Befestigungsende (6) eines zweiten Querbalkens (10) angeordnet ist, wobei ein Verbindungsende (8) des zweiten Querbalkens (10) mit einem zweiten Winkel (a2) mit einem zweiten Endabschnitt (11) des Hauptträgers (2) verbunden ist, wobei der zweite Endabschnitt (11) dem ersten Endabschnitt (9) gegenüberliegt und wobei der zweite Winkel (a2) kleiner als 180° ist.

3. Turmsegment (25) nach Anspruch 2,
**dadurch gekennzeichnet, dass** der Hauptträger (2), der erste Querbalken (7) und der zweite Querbalken (10) in derselben Ebene angeordnet sind.

4. Turmsegment (25) nach einem der vorhergehenden Ansprüche, **dadurch gekennzeichnet, dass** ein Verbindungsende (8) eines dritten Querbalkens (12) mit einem dritten Winkel (a3) mit dem ersten Endabschnitt (9) des Hauptträgers (2) verbunden ist, wobei der dritte Winkel (a3) kleiner als der erste Winkel (a1) ist, wobei ein Befestigungsende (6) des dritten Querbalkens (12) als ein dritter Befestigungsabschnitt (13) der Haltestruktur (1) zum Befestigen der Haltestruktur (1) an einem dritten Hüllenabschnitt der Turmhülle (4) konfiguriert ist.

5. Turmsegment (25) nach Anspruch 4,
**dadurch gekennzeichnet, dass** ein Verbindungsende (8) eines vierten Querbalkens (14) mit dem Hauptträger (2) verbunden ist, wobei ein Befestigungsende (6) des vierten Querbalkens (14) als ein vierter Befestigungsabschnitt (15) der Haltestruktur (1) zum Befestigen der Haltestruktur (1) an einem vierten Hüllenabschnitt der Turmhülle (4) konfiguriert ist, wobei der vierte Befestigungsabschnitt (15) in einer anderen Höhe als der erste Befestigungsabschnitt (3) angeordnet ist.

6. Turmsegment (25) nach einem der vorhergehenden Ansprüche, **dadurch gekennzeichnet, dass** eine Halteschnittstelle durch eine Leiterhaltehalterung (18) zum Halten einer Leiter (19) gebildet ist.

7. Turmsegment (25) nach einem der vorhergehenden Ansprüche, **dadurch gekennzeichnet, dass** eine Halteschnittstelle aus einem Kabelrohr (20) zum Halten eines Kabelbaums (21) besteht, wobei das Kabelrohr (20) an dem Hauptträger (2) montiert ist.

8. Turmsegment (25) nach Anspruch 7,
**dadurch gekennzeichnet, dass** das Kabelrohr (20) eine Klemmvorrichtung (22) zum Festklemmen des Kabelbaums (21) umfasst, der innerhalb des Kabelrohrs (20) angeordnet ist.

9. Turmsegment (25) nach einem der vorhergehenden Ansprüche, **dadurch gekennzeichnet, dass** eine Halteschnittstelle durch einen Zwischenabschnitt des Hauptträgers (2) zum Halten eines Hubmastes (23) einer Hubeinrichtung gebildet ist.

10. Turmsegment (25) nach einem der vorhergehenden Ansprüche, **dadurch gekennzeichnet, dass** die Halteschnittstelle einen Schlitz (24) zum Ermöglichen einer relativen Bewegung der internen Komponente, die an der Halteschnittstelle und der Haltestruktur (1) befestigt ist, aufweist.

## Revendications

1. Segment de tour (25) pour une tour d'une éolienne, comprenant une coque de segment de tour (26), englobant un intérieur de segment (27), une bride de segment supérieure pour raccorder le segment de tour (25) à un composant supérieur de l'éolienne et une bride de segment inférieure pour raccorder le segment de tour (25) à un composant inférieur de l'éolienne, dans lequel, à l'intérieur de l'intérieur de segment (27), une structure de maintien (1) pour maintenir des composants internes de la tour d'éolienne est fixée à la coque de segment de tour (26), dans lequel la structure de maintien (1) comprend une poutre principale (2) pour fournir une interface de maintien pour maintenir les composants internes, dans lequel la structure de maintien (1) est fixée à une première section de coque d'une coque de tour (4) de la tour d'éolienne au moyen d'une première section de fixation (3) de la structure de maintien (1) et dans lequel la structure de maintien (1) est fixée à une deuxième section de coque de la coque de tour (4) au moyen d'une deuxième section de fixation (5) de la structure de maintien (1), et la première section de fixation (3) est agencée à une extrémité de fixation (6) d'une première traverse (7), dans lequel une extrémité de raccord (8) de la première traverse (7) est raccordée à une première section d'extrémité (9) de la poutre principale (2) avec un premier angle (a1), dans lequel le premier angle (a1) est inférieur à 180°, **caractérisé en ce qu'**au moins une extrémité de raccord (8) est raccordée à la poutre principale (2) au moyen d'un support de raccord (16), dans lequel le support de raccord (16) a une plus grande flexibilité que la poutre principale (2) et/ou la première traverse (7), dans lequel au moins une extrémité de fixation (6) comprend un support de fixation (17), dans lequel le support de fixation (17) a une plus grande flexibilité que la poutre principale (2) et/ou la première traverse (7).

2. Segment de tour (25) selon la revendication 1,
**caractérisé en ce que** la deuxième section de fixation (5) est agencée à une extrémité de fixation (6) d'une deuxième traverse (10), dans lequel une extrémité de raccord (8) de la deuxième traverse (10) est raccordée à une seconde section d'extrémité (11) de la poutre principale (2) avec un deuxième angle (a2), dans lequel la seconde section d'extrémité (11) est opposée à la première section d'extrémité (9), et dans lequel le deuxième angle (a2) est inférieur à 180°.

3. Segment de tour (25) selon la revendication 2,
**caractérisé en ce que** la poutre principale (2), la première traverse (7) et la deuxième traverse (10) sont agencées dans le même plan.

4. Segment de tour (25) selon l'une quelconque des revendications précédentes,
**caractérisé en ce qu'**une extrémité de raccord (8) d'une troisième traverse (12) est raccordée à la première section d'extrémité (9) de la poutre principale (2) avec un troisième angle (a3), dans lequel le troisième angle (a3) est inférieur au premier angle (a1), dans lequel une extrémité de fixation (6) de la troisième traverse (12) est configurée comme une troisième section de fixation (13) de la structure de maintien (1) pour fixer la structure de maintien (1) à une troisième section de coque de la coque de tour (4).

5. Segment de tour (25) selon la revendication 4,
**caractérisé en ce qu'**une extrémité de raccord (8) d'une quatrième traverse (14) est raccordée à la poutre principale (2), dans lequel une extrémité de fixation (6) de la quatrième traverse (14) est configurée comme une quatrième section de fixation (15) de la structure de maintien (1) pour fixer la structure de maintien (1) à une quatrième section de coque de la coque de tour (4), dans lequel la quatrième section de fixation (15) est agencée à une hauteur différente de celle de la première section de fixation (3).

6. Segment de tour (25) selon l'une quelconque des revendications précédentes,
**caractérisé en ce qu'**une interface de maintien est constituée d'un support de maintien d'échelle (18) pour maintenir une échelle (19).

7. Segment de tour (25) selon l'une quelconque des revendications précédentes,
**caractérisé en ce qu'**une interface de maintien est constituée d'un conduit de câble (20) pour maintenir un faisceau de câbles (21), dans lequel le conduit de câble (20) est monté sur la poutre principale (2).

8. Segment de tour (25) selon la revendication 7,
**caractérisé en ce que** le conduit de câble (20) comprend un dispositif de serrage (22) pour serrer le faisceau de câbles (21), qui est agencé à l'intérieur du conduit de câble (20).

9. Segment de tour (25) selon l'une quelconque des revendications précédentes,
**caractérisé en ce qu'**une interface de maintien est constituée d'une section intermédiaire de la poutre principale (2) pour maintenir un mât d'ascenseur (23) d'un ascenseur.

10. Segment de tour (25) selon l'une quelconque des revendications précédentes,
**caractérisé en ce que** l'interface de maintien présente une fente (24) pour permettre un mouvement relatif du composant interne, fixé à l'interface de maintien et à la structure de maintien (1).
